# EUROPÄISCHE PATENTSCHRIFT

(11) **EP 1 396 449 B1**
(45) Veröffentlichungstag und Bekanntmachung des Hinweises auf die Patenterteilung: **01.03.2006**
(21) Anmeldenummer: 03017246.4
(22) Anmeldetag: 30.07.2003
(51) Int. Cl.: B65G 47/64

(54) **Verfahren zum Sortieren von Papierrollen und Rollensortier-Vorrichtung**
Method for sorting paper rolls and roll sorting apparatus
Procédé pour trier des rouleaux de papier et dispositif de triage de rouleaux

(30) Priorität: 04.09.2002 DE 10240699
(43) Veröffentlichungstag der Anmeldung: 10.03.2004
(73) Patentinhaber: Voith Paper Patent GmbH, 89522 Heidenheim (DE)
(72) Erfinder: Fritz, Ulrich, 46047 Oberhausen (DE); Heyer, Karl, 47877 Willich (DE)
(74) Vertreter: Knoblauch, Andreas

(56) Entgegenhaltungen:
- WO-A-02/02444
- DE-A- 19 929 985
- US-A- 4 836 386
- US-A- 5 984 078

## Beschreibung

Die Erfindung betrifft ein Verfahren zum Sortieren von Papierrollen, bei dem man eine erste Art von Papierrollen in einer ersten Speichereinrichtung ablegt und eine andere Art von Papierrollen in mindestens einer zweiten Speichereinrichtung ablegt. Ferner betrifft die Erfindung eine Rollensortier-Vorrichtung mit einem Eingang, durch den Rollen in einer Transportrichtung zuführbar sind, einem Ausgang und dazwischen mindestens zwei Speichereinrichtungen.

Papier- und Kartonbahnen werden zu Papierrollen aufgewickelt, damit auch größere Bahnlängen handhabbar sind. Beim Aufwickeln werden die Papier- oder Kartonbahnen in der Regel noch auf die richtige Breite geschnitten. Die Breite der Papier- oder Kartonbahn bestimmt dann die axiale Länge der Papierrolle. Es ist dabei nicht immer möglich und auch nicht immer gewünscht, alle Bahnen, die aus einer gemeinsamen "Mutterbahn" geschnitten werden, mit der gleichen Breite zu versehen, so daß Papierrollen mit unterschiedlichen axialen Längen entstehen. Diese Papierrollen müssen sortiert werden, wobei als Sortierkriterien neben der axialen Länge auch andere Faktoren berücksichtigt werden können, wie Rollendurchmesser, Papierart oder dergleichen.

Es ist ein weit verbreitetes Verfahren, die Einzelrollen auf sogenannten "schrägen Ebenen" zwischenzuspeichern. Die Papierrollen werden mit einem Förderband an das obere Ende der schrägen Ebene gefahren und an einer passenden Position die schräge Ebene herabgerollt. Dabei sind in der schrägen Ebene mehrere.Rollenfänger angeordnet, die die Rolle dann auffangen. Durch Freigabe der Rollenfänger lassen sich dann Rollensätze am unteren Ende der schrägen Ebene zusammenstellen. Dort werden sie von einem weiteren Förderband abtransportiert. Diese Transporteinrichtung fördert die Rollen nacheinander auf einen Kippstuhl. Sobald der Kippstuhl "voll" ist, wird er um 90° geschwenkt, so daß der Rollensatz dann aufrecht steht. Dieses auch als "Kaminstapelung" bezeichnete Verfahren vermindert den Raumbedarf.

Diese sogenannten Sortierdecks erfordern viel Platz, sind konstruktiv aufwendig und daher entsprechend kostspielig. Nachteilig ist auch, daß die beschriebene Rollenhandhabung wegen der verschiedenen Rollenfangvorgänge alles andere als schonend ist.

Man hat daher in WO 02/02444 A1 ein Verfahren und eine Vorrichtung vorgeschlagen, bei der Papierrollen, die über einen Eingangstransporteuer zugeführt werden, auf einem beweglichen Transporteur abgelegt werden. Dieser bewegliche Transporteur ist quer zur Transportrichtung bewegbar und verteilt die ankommenden Papierrollen auf unterschiedliche Speicherplätze. Eine entsprechende Transporteinrichtung ist am Ausgang vorgesehen. Diese Transporteinrichtung holt die einzelnen Papierrollen von den Speicherplätzen ab und transportiert sie zu einem Ausgang. In Transportrichtung hinter jedem Speicherplatz ist ein weiterer Speicherplatz angeordnet, in den der Inhalt eines Speicherplatzes entleert werden kann, um gleichzeitig ein Beschicken und ein Entladen von Speicherstellen vornehmen zu können. Auch diese Vorgehensweise ist relativ aufwendig.

US 5 984 078 A zeigt eine automatisierte Sortiereinrichtung für Förderer, bei der entlang einer Förderstrecke mehrere Weichen angeordnet sind. An jeder Weiche gehen quer zur Transportrichtung des Förderers zwei Äste ab. Jede Weiche weist einen Wagen auf, auf dem ein in Transportrichtung verlaufendes Förderband angeordnet ist. Zusätzlich weist der Wagen zwei Transportbänder auf, die unter einem rechten Winkel zur Transportrichtung stehen. Wenn nun der Wagen in der Mitte positioniert wird, dann wird ein ankommendes Paket geradeaus weiter gefördert. Wenn eines der beiden rechtwinklig zur Transportrichtung fördernden Transportbänder in den Weg des Pakets gefahren wird, dann wird das Paket nach links oder nach rechts auf einen Abzweig geschickt.

Der Erfindung liegt die Aufgabe zugrunde, eine einfache Möglichkeit zum Sortieren von Papierrollen anzugeben.

Diese Aufgabe wird bei einem Verfahren der eingangs genannten Art dadurch gelöst, daß man die Speichereinrichtungen in Transportrichtung der Papierrollen hintereinander anordnet und die Papierrollen einer Art an der Speichereinrichtung der Papierrollen der anderen Art seitlich vorbei transportiert, wobei man die zu beladene Speichereinrichtung in Transportrichtung in Ausrichtung mit einem Eingang bringt und zwischen dem Eingang und der Speichereinrichtung eine Transportstrecke einrichtet.

Damit ist es möglich, die Papierrollen zu beliebigen Rollensätzen zusammenzustellen. Die Reihenfolge, in der fertige Rollensätze aus den jeweiligen Speichereinrichtungen abgerufen werden kann, ist frei wählbar. Die Rollen werden sehr schonend transportiert und ebenso schonend zu Rollensätzen gruppiert. Vor allem aber gibt es den Vorteil, daß auch dann, wenn sich bereits Rollen in sämtlichen Speichereinrichtungen befinden, ein Transportweg durch die Sortiereinrichtung frei bleibt, so daß man eine zusätzliche Möglichkeit für die Handhabung der Papierrollen erhält. Beispielsweise können Rollen, die im Augenblick mangels Speicherplätzen nicht sortiert werden können, ohne weiteres woanders hin transportiert werden, ohne daß zuvor ein Entleeren der Sortiereinrichtung erforderlich ist. Da in vielen Fällen gleichartige Rollen hintereinander ankommen, ist es mit dem Verfahren auch möglich, diese gleichartigen Rollen sofort zu einem Rollensatz zusammenzustellen, ohne daß sie zwischengespeichert werden müssen. Auch dies verbessert die Möglichkeit zum Sortieren von Papierrollen. Auf der Transportstrecke können die Papierrollen an den übrigen Speichereinrichtungen vorbei transportiert werden. Da die zu beladene Speichereinrichtung in Ausrichtung mit dem Eingang steht, reicht eine geradlinige Bewegung der Papierrolle aus, um sie auf die Speichereinrichtung zu bringen. Die Rollenhandhabung wird dadurch sehr schonend.

Alternativ oder zusätzlich kann vorgesehen sein, daß man eine Speichereinrichtung entleert, indem man sie in Transportrichtung in Ausrichtung mit einem Ausgang bringt und eine Transportstrecke zwischen der Speichereinrichtung und dem Ausgang einrichtet. Das Entleeren erfolgt damit im Prinzip genauso wie das Beladen einer Speichereinrichtung. Auch hier kann man natürlich die gleiche Vorgehensweise verwenden und jeder Speichereinrichtung einen Abschnitt der Transportstrecke zuordnen, so daß durch die entsprechende Verlagerung der Speichereinheit die Transportstrecke eingerichtet oder unterbrochen wird.

Vorzugsweise unterteilt man die Transportstrecke in eine Anzahl von Abschnitte, die der Anzahl von hintereinander angeordneten Speichereinrichtungen entspricht, man ordnet jeder Speichereinrichtung einen Abschnitt zu und man verlagert die Speichereinrichtung und den zugeordneten Abschnitt quer zur Transportrichtung gemeinsam. Dadurch ist es möglich, die Vorrichtung, die zur Durchführung des Verfahrens verwendet wird, modulartig aufzubauen. Man stellt dabei sicher, daß für jede Speichereinrichtung eine Bypass-Strecke vorhanden ist. Diese Bypass-Strecke wird sofort in die Transportstrecke integriert, wenn die entsprechende Speichereinrichtung in eine Speicherposition verfahren wird. Umgekehrt wird die Transportstrecke durch die Speichereinrichtung unterbrochen und steht damit zur Aufnahme einer Papierrolle zur Verfügung, wenn die Einheit, die die Speichereinrichtung und den Abschnitt der Transportstrecke trägt, in die entsprechende Aufnahmeposition für die Speichereinrichtung verlagert wird.

Vorzugsweise begrenzt man die Anzahl der Papierrollen in einer Speichereinrichtung so, daß ihre axiale Gesamtlänge der maximalen Stapelhöhe einer Kaminstapelung entspricht. Damit kann eine Speichereinrichtung selbst relativ kurz gehalten werden. In einer Kaminstapelung kann man, je nach Ausführungsform der Stapelanlage, Höhen von maximal 3,5 oder 4 m speichern. Dementsprechend kurz kann auch die Speichereinrichtung sein.

Die Aufgabe wird bei einer Rollensortier-Vorrichtung der eingangs genannten Art dadurch gelöst, daß die Speichereinrichtungen in Transportrichtung hintereinander angeordnet sind und in der Lage sind, eine aufliegende Rolle in Transportrichtung zu transportieren oder die Rolle ruhen zu lassen, daß jeder Speichereinrichtung eine Bypass-Einrichtung zugeordnet ist und daß eine aus Bypass-Einrichtung und mindestens einer Speichereinrichtung gebildete Einheit quer zur Transportrichtung verlagerbar ist, wobei aus jeder Einheit entweder die Speichereinrichtung oder die Bypass-Einrichtung parallel zur Transporteinrichtung in einer Linie mit dem Eingang ausrichtbar ist.

Mit einer derartigen Vorrichtung ist es auf einfache Weise möglich, Speichereinrichtungen entweder zu beladen oder Papierrollen an der Speichereinrichtung vorbei zu fahren, wenn die Papierrolle in einer anderen Speichereinrichtung abgelegt werden soll oder aus einer anderen Speichereinrichtung zum Ausgang transportiert werden soll. Durch das Verlagern der Einheit läßt sich entweder die Bypass-Einrichtung in Ausrichtung mit dem Eingang bringen, so daß ein Transport der Papierrolle an eine beliebige Stelle in der Vorrichtung oder sogar durch die Vorrichtung hindurch möglich ist, oder man kann die Speichereinrichtung in Ausrichtung mit dem Eingang bringen, um eine ankommende Papierrolle aufzunehmen. Wenn die Papierrolle aufgenommen worden ist und eine andere Papierrolle nachfolgt, läßt sich die Einheit wieder quer zur Transportrichtung verlagern, um den Durchgang der nachfolgenden Papierrolle durch diese Einheit zu erlauben.

Vorzugsweise sind die Speichereinrichtung und die Bypass-Einrichtung gleich ausgebildet. Dies erlaubt es, mit einer geringeren Ersatzteil-Bevorratung auszukommen. Auch der konstruktive Aufwand wird verringert. Schließlich läßt sich eine Speichereinrichtung not falls auch als Bypass-Einrichtung verwenden, so daß bei verminderter Speicherfähigkeit ansonsten die volle Funktionalität der Vorrichtung erhalten bleibt.

Bevorzugterweise liegen der Eingang und der Ausgang in Transportrichtung auf einer geraden Linie. Damit läßt sich eine Papierrolle vom Eingang zum Ausgang transportieren, ohne daß man dazwischen Pausen einlegen muß, in denen die Einheiten mit Speichereinrichtung und Bypass-Einrichtung verlagert werden müssen.

Vorzugsweise sind die Einheiten in einem Grundzustand in einer Durchgangsstellung positioniert, in der die Bypass-Einrichtungen auf einer Linie hintereinander mit dem Eingang und dem Ausgang angeordnet sind. Die Bypass-Einrichtungen erlauben es dann, daß eine Papierrolle die Vorrichtung insgesamt durchfährt, ohne aufgehalten zu werden. Lediglich dann, wenn das Speichern einer Papierrolle in einer Einheit erforderlich ist, muß die Einheit verlagert werden, um die Speichereinrichtung in die Linie einzubauen. Dies erleichtert die Steuerung.

Vorzugsweise weist jede Speichereinrichtung eine Länge auf, die der maximalen Stapelhöhe einer Kaminstapelung entspricht. Die Speichereinrichtung kann dementsprechend relativ kurz gehalten werden. Sie weist also eine Länge im Bereich von 3,5 bis 4 m auf. Dementsprechend kann man relativ viele Speichereinrichtungen hintereinander anordnen, ohne übermäßig viel Platz zu benötigen.

Bevorzugterweise weist jede Speichereinrichtung einen Transporteur auf. Ein Transporteur ist in der Lage, die Papierrolle in der Speichereinrichtung zu transportieren, d.h. zu verlagern. Ein derartiger Transporteur kann als Platten- oder Bandtransporteur ausgebildet sein. Die Vorrichtung kann damit automatisch arbeiten, d.h. es sind praktisch keine manuellen Eingriffe von Bedienungspersonen erforderlich.

Vorzugsweise ist in Transportrichtung hinter dem Ausgang ein Kippstuhl angeordnet. Wenn man den Kippstuhl relativ kurz hinter dem Ausgang anordnet, dann bleiben die Transportstrecken klein und die Handhabung der Rollen ist schonend. Man kann die Papierrollen entweder direkt auf den Kippstuhl transportieren oder sie auf dem Weg zum Kippstuhl zunächst zu beliebigen Rollensätzen zusammenstellen und diese dann geschlossen auf den Kippstuhl fahren.

Bevorzugterweise weist jede Einheit einen Wagen auf, der auf Schienen verfahrbar ist und der die Speichereinrichtung und die Bypass-Einrichtung trägt. Die Schienen sind dabei quer zur Transportrichtung verlegt. Auf den Schienen ist ein weitgehend erschütterungsfreies Verlagern des Wagens möglich. Ein Anheben oder ein Absenken der Rolle ist im Grunde nicht erforderlich, wenn die Bypass-Einrichtung und die Speichereinrichtung in der gleichen Ebene angeordnet sind. Dies vereinfacht die Verlagerung eines beladenen Wagens, auf dem eine oder mehrere Papierrollen liegen.

Vorzugsweise weist jede Einheit einen gesteuerten Verlagerungsantrieb auf, dessen Beschleunigung und Verzögerung auf vorbestimmte Werte begrenzt sind. Die Einheit kann sich dann sanft anlaufend und sanft begrenzt quer zur Transportrichtung bewegen. Die Gefahr, daß eine auf der Einheit befindliche Papierrolle durch starke Stöße beschädigt wird oder sogar von der Einheit herabfällt, ist sehr gering.

Hierbei ist besonders bevorzugt, daß der Verlagerungsantrieb als Hydraulikzylinder oder als frequenzgeregelter Elektromotor ausgebildet ist. Beide Antriebsarten erlauben ein sehr schonendes Verlagern der Einheit, so daß die Papierrolle praktisch nicht belastet wird.

Die Erfindung wird im folgenden anhand eines bevorzugten Ausführungsbeispiels in Verbindung mit der Zeichnung näher beschrieben. Hierin zeigen:
- Fig. 1: eine schematische Draufsicht auf eine Rollensortier-Vorrichtung,
- Fig. 2: einen vergrößerten Ausschnitt aus Fig. 1 und
- Fig. 3: den Ausschnitt aus Fig. 2 in einer Beschikkungsstellung.

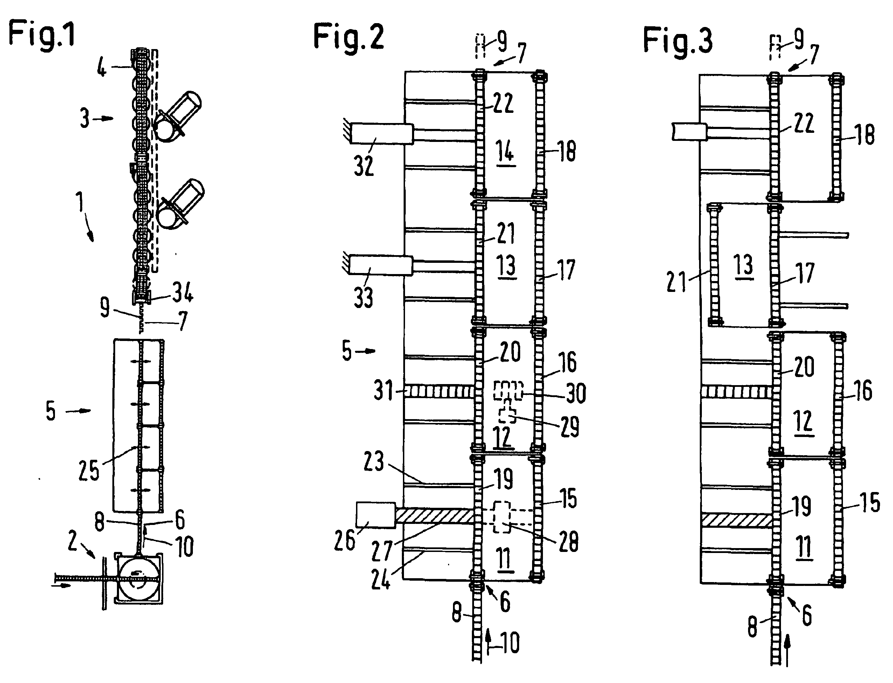

Fig. 1 zeigt eine Rollensortier-Anlage 1 mit einem Eingangsabschnitt 2 und einem Lagerabschnitt 3, in dem eine Vielzahl von Rollenstapeln 4 in vertikaler Richtung gestapelt werden kann. Eine derartige Lagerung, bei der auch mehrere Rollen in Axialrichtung übereinander angeordnet werden können, wird auch als "Kaminstapelung" bezeichnet. Ein Stapel aus mehreren übereinander angeordneten Rollen darf in der Regel aus Stabilitätsgründen eine Höhe von 3, 5 oder 4 m nicht überschreiten.

Die Rollensortier-Anlage 1 weist eine Rollensortier-Vorrichtung 5 mit einem Eingang 6 und einem Ausgang 7 auf. Wie es schematisch dargestellt ist, ist der Eingang 6 gebildet durch einen Transporteur, beispielsweise einen Plattentransporteur 8 mit einer Länge von beispielsweise 3,5 m. Der Plattentransporteur 8 befindet sich etwa auf dem Niveau des Fußbodens der Anlage. In gleicher Weise ist der Ausgang 7 gebildet durch einen Plattentransporteur 9 von ebenfalls etwa 3,5 m Länge, der sich ebenfalls etwa auf Fußbodenniveau befindet. Durch den Eingang 6 und den Ausgang 7 können nicht näher dargestellte Papierrollen in Richtung eines Pfeiles 10 transportiert werden. Diese Richtung wird im folgenden als "Transportrichtung" 10 bezeichnet.

Die Rollensortier-Vorrichtung 5 weist im vorliegenden Ausführungsbeispiel vier Einheiten 11-14 auf. Jede Einheit 11-14 trägt eine Speichereinrichtung 15-18 und eine Bypass-Einrichtung 19-22. Sowohl die Speichereinrichtung 15-18 jeder Einheit 11-14 als auch die Bypass-Einrichtung 19-22 kann durch jeweils einen Transporteur gebildet sein, beispielsweise einen Plattentransporteur oder einen Bandtransporteur. Natürlich kann eine Einheit 11-14 auch mehr als eine Speichereinrichtung 15-18 aufweisen. Hierbei kann es zweckmäßig sein, die zusätzlichen Speichereinrichtungen (nicht dargestellt) auf beiden Seiten der Bypass-Einrichtung zu verteilen. Die Länge einer jeden Einheit 11-14 in Transportrichtung liegt bei etwa 3,5 m. Die Speichereinrichtungen 15-18 und die Bypass-Einrichtungen 19-22 befinden sich etwa in der gleichen Höhe, wie die Transporteure 8,9 am Eingang 6 und am Ausgang 7, also auf Fußbodenniveau.

Jede Einheit 11-14 ist getrennt von den übrigen Einheiten quer zur Transportrichtung 10 verfahrbar. Für jede Einheit 11-14 sind Schienen 23, 24 vorgesehen, auf denen die Einheiten 11-14 in Richtung der in Fig. 1 dargestellten Doppelpfeile 25 bewegbar sind.

Jede Einheit 11-14 weist einen Linearantrieb auf, der unterschiedliche Ausbildungen haben kann.

So weist die Einheit 11 einen Elektromotor 26 auf, der eine Spindel 27 dreht. Die Spindel 27 steht in Eingriff mit einer schematisch gestrichelt dargestellten Mutter 28, d.h. wenn sich die Spindel 27 dreht, wird die Einheit 11 nach links oder rechts, in Abhängigkeit von Abhängigkeit der Drehrichtung der Spindel 27, bewegt. Bei dem Elektromotor 26 handelt es sich um einen frequenzgesteuerten Elektromotor, dessen Geschwindigkeit sehr genau einstellbar ist. Dadurch läßt sich das Beschleunigen und das Abbremsen der Einheit 11 sehr gut steuern. Die Beschleunigung und die Verzögerung der Einheit 11 wird dadurch in gewissen Grenzen gehalten. Auf eine Papierrolle, die beispielsweise auf der Speichereinrichtung 15 oder auf der Bypass-Einrichtung 19 liegt, werden dementsprechend bei einer Querbewegung der Einheit 11 nur relativ kleine Kräfte ausgeübt.

Am Beispiel der Einheit 12 soll ein anderer Antrieb dargestellt werden. Der Antrieb der Einheit 12 weist ebenfalls einen Elektromotor 29 auf, der ein Zahnrad 30 (gestrichelt eingezeichnet) antreibt. Das Zahnrad 30 steht in Eingriff mit einer Zahnstange 31.

Die Einheiten 13, 14 werden von einem hydraulischen Zylinder 32, 33 angetrieben.

In allen Fällen gilt, daß die Bewegung der Einheiten 11-14 quer zur Transportrichtung 10 so erfolgt, daß die Einheiten 11-14 sanft anlaufen und sanft abgebremst werden.

Die Speichereinrichtungen 15-18 und die Bypass-Einrichtungen 19-22 sind, wie oben bereits ausgeführt, als Transporteure ausgebildet, d.h. als Band- oder Plattentransporteur. Ihr Antrieb ist nicht näher dargestellt, aber an sich bekannt. Die Energieversorgung der Antriebe für die Speichereinrichtungen 15-18 und die Bypass-Einrichtungen 19-22 erfolgt über eine Energiekette.

Die Bypass-Einrichtungen 19-22 und die Speichereinrichtungen 15-18 können baugleich ausgebildet sein. Beide sind in der Lage, eine aufliegende Papierrolle in Transportrichtung 10 zu transportieren oder die Papierrolle ruhen zu lassen.

Im Anschluß an den Ausgang 7 ist ein Kippstuhl 34 angeordnet, mit dem es möglich ist, einen Stapel von Papierrollen, der horizontal antransportiert wird, in die Vertikale zu kippen.

Die Arbeitsweise der Sortiervorrichtung 5 soll nun beschrieben werden:

Bei der in Fig. 2 dargestellten Ausrichtung der Einheiten 11-14 können Papierrollen, die über den Transporteur am Eingang 6 ankommen, nacheinander auf den Kippstuhl 34 gefahren und dort gemeinsam aufgerichtet werden, nachdem der fertige Rollensatz gebildet ist. Dies gilt beispielsweise dann, wenn hintereinander weg mehrere gleichartige Rollen ankommen, die in einem gemeinsamen Stapel in dem Lagerabschnitt 3 gelagert werden können.

Kommen die einzelnen Rollen dagegen "unsortiert" vom Transporteur 8 am Eingang 6 an, so müssen sie vor dem Weitertransport vom Kippstuhl 34 erst noch sortiert werden. Zu diesem Zweck wird beispielsweise die Einheit 13, wie in Fig. 3 dargestellt, so verfahren, daß nicht die Bypass-Einrichtung 21, sondern die Speichereinrichtung 17 auf einer geraden Linie zwischen dem Eingang 6 und dem Ausgang 7 angeordnet ist. Eine ankommende Papierrolle wird dann über die Bypass-Einrichtungen 19, 20 an den Speichereinrichtungen 15, 16 vorbei in die Speichereinrichtung 17 gefahren. Folgt nun auf diese Papierrolle eine gleichartige Rolle, dann kann die Einheit 13 in der in Fig. 3 dargestellten Position verbleiben, um die nächste Rolle aufzunehmen. Die nächste Rolle kann mit einer Trennfuge von 50 bis 100 mm, d.h. mit einem kleinen Abstand, auf der Speichereinrichtung 17 angeordnet werden. Es ist aber auch möglich, die Rollen stirnseitig aneinander anliegen zu lassen, d.h. sie "Stoß auf Stoß" zu fahren.

Kommt hingegen eine andere Art von Rolle an, die nicht in der Speichereinrichtung 17 gespeichert werden soll, dann wird die Einheit 13 in die in Fig. 2 dargestellte Position zurückgefahren und eine andere Einheit, beispielsweise die Einheit 12 nach links verfahren, so daß ihre Speichereinrichtung 16 zur Aufnahme von Rollen bereit ist, d.h. in eine Linie mit dem Eingang 6 und der Bypass-Einrichtung 19 liegt.

Wenn dann wieder eine Rolle ankommt, die in der Speichereinrichtung 17 gespeichert werden soll, dann wird die Einheit 12 in die in Fig. 3 dargestellte Position zurückgefahren und die Einheit 13 so verfahren, daß die Speichereinrichtung 17 zur Aufnahme einer Rolle zur Verfügung steht.

Es leuchtet ein, daß sich auf diese Weise so viel Rollensätze verschiedenen Typs bilden lassen, wie es Einheiten 11-14 gibt. Zur Entsorgung der fertigen Rollensätze, d.h. zur Entleerung der Speichereinrichtungen 15-18 wird die Einheit 11-14 so verfahren, daß die entsprechende Speichereinrichtung 15-18 auf eine Linie zwischen dem Eingang 6 und dem Ausgang 7 liegt. Die anderen Einheiten bleiben jeweils in der in Fig. 2 dargestellten Grundstellung, bei der die Bypass-Einrichtungen auf der Linie zwischen dem Eingang 6 und dem Ausgang 7 liegen. Der Rollensatz kann danach über die stromab folgenden Bypass-Einrichtungen 19-22 an den verbleibenden Speichereinrichtungen vorbei zum Ausgang 7 verfahren werden und über den Transporteur 9 zum Kippstuhl 34 gelangen. Spätestens auf dem Kippstuhl müssen die Rollen, die den Rollensatz bilden, dann stirnseitig aneinander anliegen, damit der Satz beschädigungsfrei ausgerichtet werden kann. Falls sie zuvor noch mit Abstand angeordnet waren, müssen sie auf dem Kippstuhl vereinigt werden.

Die Beschickung der Einheiten 11-14 mit Einzelrollen zum Bilden von sortierten Rollensätzen kann also "chaotisch" erfolgen. Gleichwohl bleibt immer ein freier Pfad vorhanden, auf dem Rollen durch die Vorrichtung 5 transportiert werden können. Bei der Entsorgung der fertigen Rollensätze hat der Betreiber die volle Freiheit, welchen Satz er zuerst entsorgen will. Er ist also durch die Position des Rollensatzes in der Vorrichtung 5 in keiner Weise gebunden, eine bestimmte Entsorgungsreihenfolge einzuhalten.

## Patentansprüche

1. Verfahren zum Sortieren von Papierrollen, bei dem man eine erste Art von Papierrollen in einer ersten Speichereinrichtung ablegt und eine andere Art von Papierrollen in mindestens einer zweiten Speichereinrichtung ablegt, **dadurch gekennzeichnet, daß** man die Speichereinrichtungen in Transportrichtung der Papierrollen hintereinander anordnet und die Papierrollen einer Art an der Speichereinrichtung der Papierrollen der anderen Art seitlich vorbei transportiert, wobei man die zu beladene Speichereinrichtung in Transportrichtung in Ausrichtung mit einem Eingang bringt und zwischen dem Eingang und der Speichereinrichtung eine Transportstrecke einrichtet.

2. Verfahren zum Sortieren von Papierrollen, bei dem man eine erste Art von Papierrollen in einer ersten Speichereinrichtung ablegt und eine andere Art von Papierrollen in mindestens einer zweiten Speichereinrichtung ablegt, **dadurch gekennzeichnet, daß** man die Speichereinrichtungen in Transportrichtung der Papierrollen hintereinander anordnet und die Papierrollen einer Art an der Speichereinrichtung der Papierrollen der anderen Art seitlich vorbei transportiert, wobei man eine Speichereinrichtung entleert, indem man sie in Transportrichtung in Ausrichtung mit einem Ausgang bringt und eine Transportstrecke zwischen der Speichereinrichtung und dem Ausgang einrichtet.

3. Verfahren nach Anspruch 1 oder 2, **dadurch gekennzeichnet, daß** man die Transportstrecke in eine Anzahl von Abschnitte unterteilt, die der Anzahl von hintereinander angeordneten Speichereinrichtungen entspricht, daß man jeder Speichereinrichtung einen Abschnitt zugeordnet und daß man die Speichereinrichtung und den zugeordneten Abschnitt quer zur Transportrichtung gemeinsam verlagert.

4. Verfahren nach einem der Ansprüche 1 bis 3, **dadurch gekennzeichnet, daß** man die Anzahl der Papierrollen in einer Speichereinrichtung so begrenzt, daß ihre axiale Gesamtlänge der maximalen Stapelhöhe einer Kaminstapelung entspricht.

5. Rollensortier-Vorrichtung mit einem Eingang, durch den Rollen in einer Transportrichtung zuführbar sind, einem Ausgang und dazwischen mindestens zwei Speichereinrichtungen, **dadurch gekennzeichnet, daß** die Speichereinrichtungen in Transportrichtung hintereinander angeordnet sind und in der Lage sind, eine aufliegende Rolle in Transportrichtung (10) zu transportieren oder die Rolle ruhen zu lassen, daß jeder Speichereinrichtung (15-18) eine Bypass-Einrichtung (19-22) zugeordnet ist und daß eine aus Bypass-Einrichtung (19-22) und mindestens einer Speichereinrichtung (15-18) gebildete Einheit (11-14) quer zur Transportrichtung (10) verlagerbar ist, wobei aus jeder Einheit (11-14) entweder die Speichereinrichtung (15-18) oder die Bypass-Einrichtung (19-22) parallel zur Transportrichtung (10) in einer Linie mit dem Eingang (6) ausrichtbar ist.

6. Vorrichtung nach Anspruch 5, **dadurch gekennzeichnet, daß** die Speichereinrichtung (15-18) und die Bypass-Einrichtung (19-22) gleich ausgebildet sind.

7. Vorrichtung nach Anspruch 5 oder 6, **dadurch gekennzeichnet, daß** der Eingang (6) und der Ausgang (7) in Transportrichtung (10) auf einer geraden Linie liegen.

8. Vorrichtung nach einem der Ansprüche 5 bis 7, **dadurch gekennzeichnet, daß** die Einheiten (11-14) in einem Grundzustand in einer Durchgangsstellung positioniert sind, in der die Bypass-Einrichtungen (19-22) auf einer Linie mit dem Eingang (6) und dem Ausgang (7) hintereinander angeordnet sind.

9. Vorrichtung nach einem der Ansprüche 5 bis 8, **dadurch gekennzeichnet, daß** jede Speichereinrichtung (15-18) eine Länge aufweist, die der maximalen Stapelhöhe einer Kaminstapelung entspricht.

10. Vorrichtung nach einem der Ansprüche 5 bis 9, **dadurch gekennzeichnet, daß** jede Speichereinrichtung (15-18) einen Transporteur aufweist.

11. Vorrichtung nach einem der Ansprüche 5 bis 10, **dadurch gekennzeichnet, daß** in Transportrichtung (10) hinter dem Ausgang (7) ein Kippstuhl (34) angeordnet ist.

12. Vorrichtung nach einem der Ansprüche 5 bis 11, **dadurch gekennzeichnet, daß** jede Einheit (11-14) einen Wagen aufweist, der auf Schienen (23, 24) verfahrbar ist und der die Speichereinrichtung (15-18) und die Bypass-Einrichtung (19-22) trägt.

13. Vorrichtung nach einem der Ansprüche 5 bis 12, **dadurch gekennzeichnet, daß** jede Einheit (11-14) einen gesteuerten Verlagerungsantrieb (26-33) aufweist, dessen Beschleunigung und Verzögerung auf vorbestimmte Werte begrenzt sind.

14. Vorrichtung nach Anspruch 13, **dadurch gekennzeichnet, daß** der Verlagerungsantrieb als Hydraulikzylinder (32, 33) oder als frequenzgeregelter Elektromotor (26, 29) ausgebildet ist.

## Claims

1. Method for sorting paper rolls, in which a first type of paper rolls is deposited in a first storage device and another type of paper rolls is deposited in at least one second storage device, **characterized in that** the storage devices are arranged one after another in the transport direction of the paper rolls, and the paper rolls of one type are transported laterally past the storage device of the paper rolls of the other type, the storage device to be loaded being brought into alignment with an input in the transport direction and a transport path being set up between the input and the storage device.

2. Method for sorting paper rolls, in which a first type of paper rolls is deposited in a first storage device and another type of paper rolls is deposited in at least one second storage device, **characterized in that** the storage devices are arranged one after another in the transport direction of the paper rolls, and the paper rolls of one type are transported laterally past the storage device of the paper rolls of the other type, a storage device being emptied by being brought into alignment with an output in the transport direction and a transport path being set up between the storage device and the output.

3. Method according to Claim 1 or 2, **characterized in that** the transport path is subdivided into a number of sections which corresponds to the number of storage devices arranged one after another, **in that** each storage device is assigned a section, and **in that** the storage device and the associated section are jointly displaced transversely with respect to the transport direction.

4. Method according to one of Claims 1 to 3, **characterized in that** the number of paper rolls in a storage device is limited such that their axial total length corresponds to the maximum stacking height of a "chimney" stacking system.

5. Roll sorting apparatus having an input, through which rolls can be fed in a transport direction, an output and at least two storage devices in between, **characterized in that** the storage devices are arranged one after another in the transport direction and are capable of transporting a roll resting on them in the transport direction (10) or of allowing the roll to rest, **in that** each storage device (15-18) is assigned a bypass device (19-22), and **in that** a unit (11-14) formed by a bypass device (19-22) and at least one storage device (15-18) can be displaced transversely with respect to the transport direction (10), it being possible, from each unit (11-14), for either the storage device (15-18) or the bypass device (19-22) to be aligned parallel to the transport direction (10) in a line with the input (6).

6. Apparatus according to Claim 5, **characterized in that** the storage device (15-18) and the bypass device (19-22) are of identical construction.

7. Apparatus according to Claim 5 or 6, **characterized in that** the input (6) and the output (7) lie on a straight line in the transport direction (10).

8. Apparatus according to one of Claims 5 to 7, **characterized in that**, in a basic state, the units (11-14) are positioned in a through position, in which the bypass devices (19-22) are arranged one after another in a line with the input (6) and the output (7).

9. Apparatus according to one of Claims 5 to 8, **characterized in that** each storage device (15-18) has a length which corresponds to the maximum stacking height of a "chimney" stacking system.

10. Apparatus according to one of Claims 5 to 9, **characterized in that** each storage device (15-18) has a transporter.

11. Apparatus according to one of Claims 5 to 10, **characterized in that** a tilting cradle (34) is arranged after the output (7) in the transport direction (10).

12. Apparatus according to one of Claims 5 to 11, **characterized in that** each unit (11-14) has a carriage which can be moved on rails (23, 24) and which carries the storage device (15-18) and the bypass device (19-22).

13. Apparatus according to one of Claims 5 to 12, **characterized in that** each unit (11-14) has a controlled displacement drive (26-33), whose acceleration and retardation are limited to predetermined values.

14. Apparatus according to Claim 13, **characterized in that** the displacement drive is constructed as a hydraulic cylinder (32, 33) or as a controlled-frequency electric motor (26, 29).

## Revendications

1. Procédé pour trier des rouleaux de papier, dans lequel on dépose un premier type de rouleaux de papier dans un premier dispositif de stockage et on dépose un deuxième type de rouleaux de papier dans au moins un deuxième dispositif de stockage, **caractérisé en ce que** l'on dispose les dispositifs de stockage dans la direction de transport des rouleaux de papier les uns derrière les autres et l'on transporte les rouleaux de papier d'un type latéralement devant le dispositif de stockage des rouleaux de papier de l'autre type, le dispositif de stockage à charger étant amené dans la direction de transport en alignement avec une entrée et une section de transport étant disposée entre l'entrée et le dispositif de stockage.

2. Procédé pour trier des rouleaux de papier, dans lequel on dépose un premier type de rouleaux de papier dans un premier dispositif de stockage et on dépose un deuxième type de rouleaux de papier dans au moins un deuxième dispositif de stockage, **caractérisé en ce que** l'on dispose les dispositifs de stockage dans la direction de transport des rouleaux de papier les uns derrière les autres et l'on transporte les rouleaux de papier d'un type latéralement devant le dispositif de stockage des rouleaux de papier de l'autre type, un dispositif de stockage étant vidé en l'amenant dans la direction de transport en alignement avec une sortie et en disposant une section de transport entre le dispositif de stockage et la sortie.

3. Procédé selon la revendication 1 ou 2, **caractérisé en ce que** l'on divise la section de transport en une pluralité de portions qui correspond au nombre de dispositifs de stockage disposés les uns derrière les autres, **en ce que** l'on associe une portion à chaque dispositif de stockage et **en ce que** l'on décale le dispositif de stockage et la portion associée en commun, transversalement à la direction de transport.

4. Procédé selon l'une quelconque des revendications 1 à 3, **caractérisé en ce que** le nombre des rouleaux de papier dans un dispositif de stockage est limité de telle sorte que sa longueur axiale totale corresponde à la hauteur d'empilement maximale d'un empilage en cheminée.

5. Dispositif pour trier des rouleaux, comprenant une entrée, à travers laquelle des rouleaux peuvent être amenés dans une direction de transport, une sortie et au moins deux dispositifs de stockage entre elles, **caractérisé en ce que** les dispositifs de stockage sont disposés les uns derrière les autres dans la direction de transport et sont en mesure de transporter un rouleau posé dans la direction de transport (10) ou de laisser les rouleaux immobiles, **en ce que** l'on associe à chaque dispositif de transport (15-18) un dispositif de dérivation (19-22) et **en ce qu'**une unité (11-14) formée à partir du dispositif de dérivation (19-22) et d'au moins un dispositif de stockage (15-18) peut être déplacée transversalement à la direction de transport (10), soit le dispositif de stockage (15-18), soit le dispositif de dérivation (19-22) de chaque unité (11-14) pouvant être aligné parallèlement à la direction de transport (10) en alignement avec l'entrée (6).

6. Dispositif selon la revendication 5, **caractérisé en ce que** le dispositif de stockage (15-18) et le dispositif de dérivation (19-22) sont réalisés de manière identique.

7. Dispositif selon la revendication 5 ou 6, **caractérisé en ce que** l'entrée (6) et la sortie (7) se trouvent sur une ligne droite dans la direction de transport (10).

8. Dispositif selon l'une quelconque des revendications 5 à 7, **caractérisé en ce que** les unités (11-14) sont positionnées dans un état de base dans la position de passage dans laquelle les dispositifs de dérivation (19-22) sont disposés les uns derrière les autres en alignement avec l'entrée (6) et la sortie (7).

9. Dispositif selon l'une quelconque des revendications 5 à 8, **caractérisé en ce que** chaque dispositif de stockage (15-18) présente une longueur qui correspond à la hauteur d'empilement maximale d'un empilage en cheminée.

10. Dispositif selon l'une quelconque des revendications 5 à 9, **caractérisé en ce que** chaque dispositif de stockage (15-18) présente un transporteur.

11. Dispositif selon l'une quelconque des revendications 5 à 10, **caractérisé en ce que** l'on prévoit une chaise basculante (34) dans la direction de transport (10) derrière la sortie (7).

12. Dispositif selon l'une quelconque des revendications 5 à 11, **caractérisé en ce que** chaque unité (11-14) présente un chariot qui peut être déplacé sur des rails (23, 24) et qui porte le dispositif de stockage (15-18) et le dispositif de dérivation (19-22).

13. Dispositif selon l'une quelconque des revendications 5 à 12, **caractérisé en ce que** chaque unité (11-14) présente un entraînement de décalage commandé (26-33) dont l'accélération et la décélération sont limitées à des valeurs prédéfinies.

14. Dispositif selon la revendication 13, **caractérisé en ce que** l'entraînement de décalage est réalisé sous forme de cylindre hydraulique (32, 33) ou sous forme de moteur électrique à régulation de fréquence (26, 29).
